# EUROPEAN PATENT SPECIFICATION

(11) **EP 0 353 998 B1**
(45) Date of publication and mention of the grant of the patent: **09.02.1994**
(21) Application number: 89307819.6
(22) Date of filing: 01.08.1989
(51) Int. Cl.: G11B 5/235

(54) **Magnetic Head**
Magnetkopf
Tête magnétique

(30) Priority: 03.08.1988 JP 194093/88
(43) Date of publication of application: 07.02.1990
(73) Proprietor: MATSUSHITA ELECTRIC INDUSTRIAL CO., LTD., Kadoma-shi, Osaka-fu, 571 (JP)
(72) Inventor: Muraoka, Syunsaku, Hirakata-shi (JP); Suzuki, Etsuko, Neyagawa-shi (JP); Sawai, Eisuke, Hirakata-shi (JP)
(74) Representative: Sorrell, Terence Gordon

(56) References cited:
- EP-A- 0 221 697
- PATENT ABSTRACTS OF JAPAN, vol. 11, no. 45 (P-546)(2492), 10 February 1987;& JP-A-61214110
- PATENT ABSTRACTS OF JAPAN, vol. 10, no. 84 (P-442)(2141), 3 April 1986;& JP-A-60219607

## Description

The present invention relates to a magnetic head for use in a magnetic recording and reproducing apparatus such as a VTR.

Ferrite materials have been conventionally used as the material of magnetic head cores. In recent years, however, magnetic heads made of metallic magnetic materials having high levels of saturation magnetic flux density such as permalloy, sendust and an amorphous alloy have become popular in order to cope with the current demand for hither recording density and higher image quality. In general, a magnetic head core is composed of two separate core parts which are bonded together at gap surfaces. In order to achieve a high reliability,the bonding of the core parts is usually conducted by fusion of a glass. Fig. 3 is a perspective view of a head made of a known metallic magnetic material. The head core 11, which is made of a metallic magnetic material, is clamped by a pair of substrates 12. A magnetic gap is composed of a non-magnetic material 14 and the bonding of the core parts at the gap surfaces is accomplished by fusion of bonding glass 15 which fills grooves or recesses provided along a track.

When an amorphous alloy is used as the metallic magnetic material of the magnetic head core, it is not allowed to use such a bonding glass having a high melting point as that used in conventional ferrite cores, considering the magnetic characteristics of the amorphous alloy. In general, an amorphous alloy exhibits magnetization which becomes zero at the Curie point Tc and increases again when the temperature is raised to or beyond the crystallization temperature Tx, as shown in Fig. 4. In order to obtain excellent magnetic head characteristics, it is preferred that the magnetic permeability of the magnetic head is high. In order to obtain a high magnetic permeability, it is necessary to conduct a heat treatment at a temperature which is not lower than Tc and not higher than Tx, so as to eliminate any magnetic an isotropy in the magnetic film. Heating to a temperature above Tx causes the amorphous alloy to be crystallized so that the magnetic permeability is lowered. Practically, the crystallizing temperature Tx is about 500°C, while the Curie point Tc is about 450°C considering the saturation magnetic flux density. This is the reason why a bonding glass having low softening and melting temperatures has to be used as the bonding glass for bonding core half parts made of an amorphous alloy. Softening point of glass may be lowered by increasing the lead content of the glass. A large lead content, however, makes the glass unstable resulting in various shortcomings such as reduction in the mechanical strength. For these reasons, glass having low softening points of 350 to 450°C is practically used as the bonding glass for magnetic cores made of amorphous alloys.

Use of bonding glass having high melting point also is inhibited when the core is made of sendust or permalloy, because heating of such metallic magnetic material causes a separation of the core from the substrate at high temperature due to difference in the thermal expansion coefficient.

Magnetic head which will be referred to as MIG heads have been known in which a metallic magnetic material is used only in the region near the magnetic gap. This type of magnetic head also requires the use of bonding glass having a low melting point because a too high bonding temperature causes a diffusion between the metallic magnetic material and the ferrite to form a reaction layer which provides an effect resembling that of the gap.

Thus, the production of magnetic head cores from metallic magnetic materials cannot employ high bonding temperature due to restrictive conditions such as the crystallization temperature in case of an amorphous alloy, difference in the thermal expansion coefficient between the substrate and the core made of sendust or permalloy,and diffusion between the metallic magnetic material and ferrite in case of a MIG head. This essentially requires that bonding glasses having low melting points generally exhibit comparatively low levels of mechanical strength, tending to cause cracking at the gap region of the core during mechanical processing which is executed after the bonding, with the result that the yield of the magnetic head is reduced undesirably. In addition, glass having low melting points provides only low levels of bonding strength with the result that the gap size cannot be precisely controlled. These problems undesirably impair reliability of the magnetic head cores of the type described.

Patent Abstracts of Japan, 1987, Vol II, Number 45 (P-546) (2492) discloses a magnetic head construction comprising a head core (1) made of a metallic magnetic material and composed of a pair of core parts bonded together through a magnetic gap, the magnetic gap is formed of a gap material comprising layers of non-magnetic material (4) each provided on opposing gap surfaces of said core parts and a low-melting point glass (3) sandwiched therebetween.

European Patent Specification Number EP-A-0221 697 also discloses a magnetic head construction and a method of forming the same. However, the method of EP-A-0221 697 differs from Patent Abstracts of Japan, 1987, Vol II, No. 45 only insofar that the head core must be subjected to a heat treatment step after the core parts have been brought into abutment in order to ensure the core parts bond together.

A problem encountered with the magnetic head constructions of both the two last mentioned prior art references is the mechanical strength of the bond between the head cores formed by the low-melting-point glass.

The foregoing problems are overcome by the invention as defined in the appended claims. Claims 1 and 3-4 set out a method for manufactoring a magnetic head and a magnetic head employing crystalizable low-melting-point glass in the gap of the magnetic head. Claim 2 sets out a method of manufacturing a magnetic head where additionally to the crystalizable low-melting-point glass in the gap also crystalizable low-melting-point glass is used to bond an amorphous alloy layer in each of the core parts perpendicular to the gap plane.

In the heat treating process for bonding two head core parts at their gap surfaces, the glass of a low melting point still in amorphous state, held on the surfaces of the non-magnetic material layers on the gap surfaces of the core parts, is molten so as to bond two core parts to each other. The glass is then crystallized so as to enhance its strength. During the bonding heat treatment, the non-magnetic material layers existing between both core parts and the low-melting-point crystallized glass effectively present reaction between the metallic magnetic core material and the glass, thereby preventing the magnetic characteristics of the core from being impaired. It is therefore possible to bond the core parts at such a low temperature as that used for amorphous glass, without allowing any reaction to take place between the glass and the metallic magnetic core material. After the bonding, the glass develops a high bonding strength so as to enhance the bonding power of the head core parts, while attaining a high precision of the size of the narrow magnetic gap, thereby to offer a remarkable improvement in the yield and reliability of the magnetic heads.
Fig. 1 is a perspective view of an embodiment of the magnetic head in accordance with the present invention;
Figs. 2a to 2e are perspective views illustrative of an embodiment of a production process in accordance with the present invention;
Fig. 3 is a perspective view of a known magnetic head; and
Fig. 4 is a graph showing a change in magnetization of an amorphous alloy in relation to temperature.

### BRIEF DESCRIPTION OF THE DRAWINGS

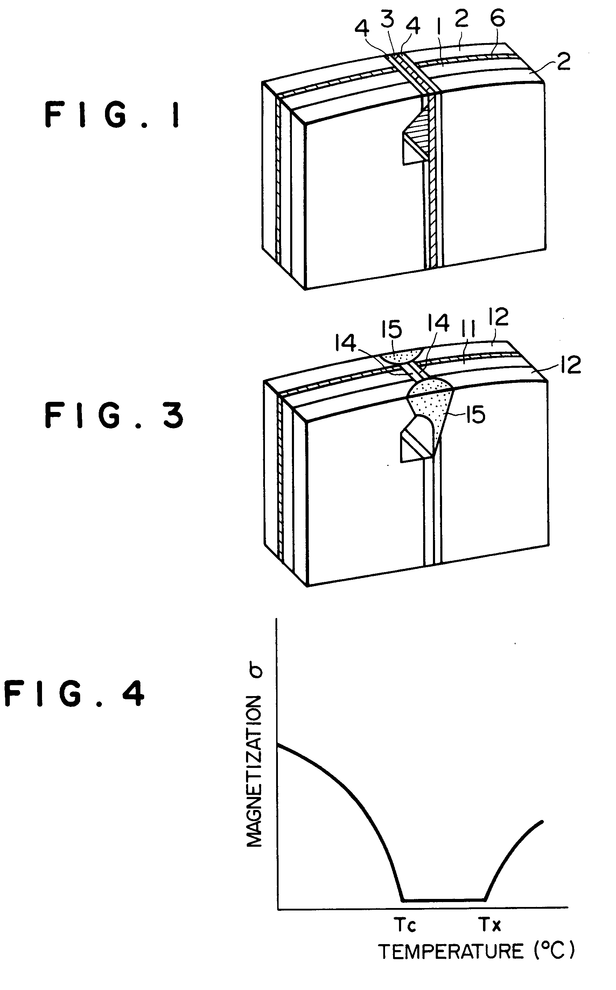

Fig. 1 is a perspective view of an embodiment of the magnetic head in accordance with the present invention;

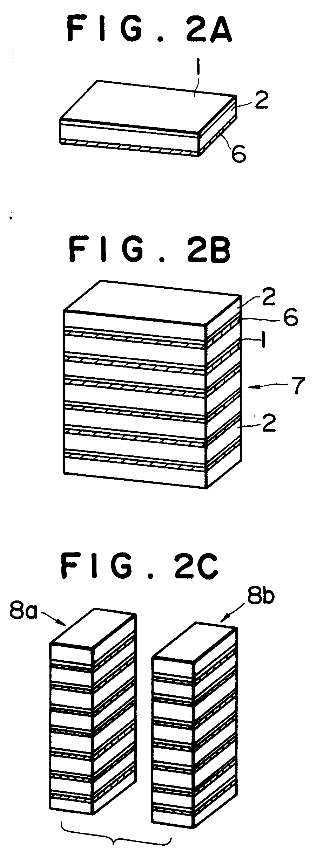

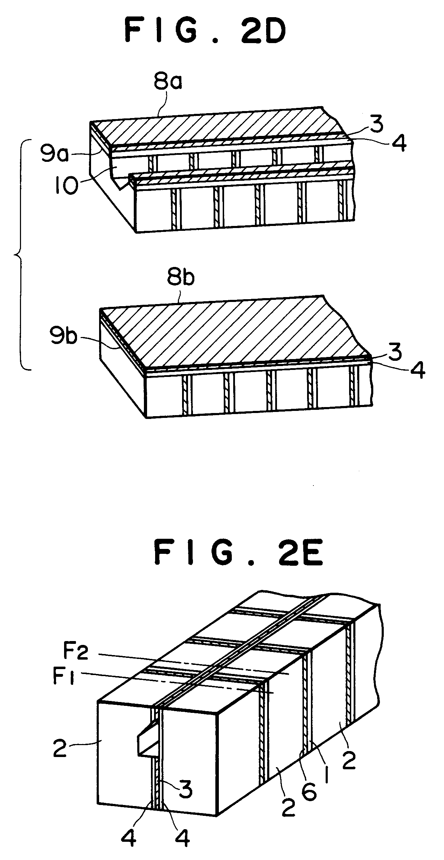

Figs. 2a to 2e are perspective views illustrative of an embodiment of a production process in accordance with the present invention;
Fig. 3 is a perspective view of a known magnetic head; and
Fig. 4 is a graph showing a change in magnetization of an amorphous alloy in relation to temperature.

An embodiment of the present invention will be described with reference to the accompanying drawings, in particular to Fig. 1. A magnetic head core 1, which is composed of two parts, is made of a metallic magnetic material which is in this embodiment assumed to be an amorphous alloy. The magnetic head core 1 is sandwiched between substrates 2. The two parts of the magnetic head core 1 are bonded together at their gap surfaces, i.e., the surfaces facing a narrow magnetic gap, by fusion and crystallization of a low-melting-point glass 3 provided between layers 4 of non-magnetic material provided on the gap surfaces of the core parts of the head core 1. The low-melting-point crystallized glass used in this embodiment is a lead-containing glass which has a softening point of about 440°C. Numeral 6 denotes a layer of bonding glass.

The process for producing a magnetic head in accordance with the present invention will be explained with reference to Figs. 2a to 2c. Referring to Fig. 2a, an amorphous alloy layer 1, which is to be used as the magnetic head core part, is formed on the surface of a substrate 2 by a thin-film forming technique such as spattering. A layer 6 of bonding glass is formed on the side of the substrate 2 opposite to the amorphous alloy layer, thus forming an element. In this embodiment, a low-melting-point crystallizable glass is used as the bonding glass. The amorphous alloy used in this embodiment has, for example, a saturation magnetic flux density of 8300 gauss, a crystallization temperature Tx of 575°C and a Curie temperature Tc of 500°C.

A plurality of elements shown in Fig. 1 are stacked as shown in Fig. 2b and pressed and heated so that a laminate block is formed. As a result of the heat treatment, the bonding glass layer 6 is crystallized so that the softening point is raised by about 100°C as compared with the amorphous state of this glass, so that the bonding layers are not softened or peeled off when being subjected to a subsequent heat treatment.

Then, the laminate block 7 is processed to form a pair of core bars 8a and 8b as shown in Fig. 2c.

Then, a winding groove 10 for receiving windings is formed in the gap surface 9a of one 8a of the core bars, and the gap surfaces 9a, 9b of both core bars 8a, 8b are polished into highly smooth state. Then, a layer or film 4 of a non-magnetic material such as SiO₂ or a high-melting-point glass is formed on the smoothed gap surfaces 9a and 9b to a predetermined thickness by, for example, spattering. Then, a layer of a low-melting-point crystallizable glass 3 is formed to a predetermined thickness by, for example, spattering on the film 4 of the non-magnetic material on each core bar. The glass layer 3 formed on the surface of the non-magnetic material layer 4 is still in amorphous state because it is formed by spattering. In the illustrated embodiment, the thickness of the non-magnetic material layer 4 and the thickness of the low-melting-point glass layer 3 are determined to be not smaller than 300Å and not smaller than 100Å, respectively. Thereafter, the core bars 8a and 8b are brought together to abut against each other at their gap surfaces 9a and 9b and are subjected to a heat treatment. In consequence, the layers of the low-melting-point crystallizable glass 3 are molten and fused and then starts to be crystallized, whereby the core bars 8a and 8b can be bonded together at their gap surfaces with a high mechanical bonding strength. In the conventional magnetic head core, the low-melting-point crystallizable glass tends to react with the amorphous alloy of the core material during the heat treatment so as to become fragile. This problems, however, is overcome by the present invention by virtue of the presence of the layer of a non-magnetic material such as SiO₂ or a high-melting-point glass formed between the crystallizable glass 3 and the gap surfaces of the two head parts so as to prevent reaction between the glass and the amorphous alloy used as the core material. An experiment showed that a satisfactory effect for preventing the reaction can be obtained when the thickness of the non-magnetic material layer is 300Å. Then, the bonded structure is cut along lines F1 and F2 shown in Fig. 2e so as to form a head of a predetermined width and the front surface of the thus formed head is polished, whereby a head tip as shown in Fig. 1 is completed. The magnetic head of the invention, produced by the method as described, offers a high yield and a high degree of precision of the gap size, thereby improving the reliability of the magnetic head.

Although a preferred embodiment has been described on an assumption that the core is made of an amorphous alloy, the described advantages are equally obtained when the invention is applied to the cores made of other magnetic metallic materials such as sendust and permalloy.

It is also to be understood that the invention can equally be applied to a MIG head in which metallic magnetic material is arranged only in the vicinity of the magnetic gap, although a magnetic head of the described embodiment has a magnetic core wholly made of a metallic magnetic material and sandwiched between substrates.

## Claims

1. A method of manufacturing a magnetic head comprising a head core (1) made of a magnetic material and comprising a first core part and a second core part bonded together to provide a recording/reproducing gap therebetween, said method comprising:-
(a) forming a non-magnetic layer made of high-melting point glass (4) on a gap surface of each of said first core bar and said second core bar;
(b) forming a gap-forming layer of a low-melting point glass (3) over said non-magnetic layer on each of said first core bar and said second core bar;
(c) abutting said gap surface of said first core bar and said gap surface of said second core bar with each other;
(d) subjecting said first core bar and said second core bar to a heat treatment to bond said first core bar and said second core bar together so that said gap forming layer of said first core bar and said gap forming layer of said second core bar are melted and fused; characterised in that the low-melting-point glass (3) of the gap forming layers is crystallisable and becomes crystallized by the heat treatment to form a recording and reproducing gap made of a low-melting point crystallized glass (3) and having a high mechanical strengh.

2. A method of manufacturing a magnetic head comprising a head core (1) made of a magnetic material and comprising a pair of amorphous alloy core parts bonded together to provide a recording/reproducing gap therebetween, said method comprising;
(a) providing a plurality of substrates (2), each of said substrates (2) having first and second surfaces positioned opposite to one another;
(b) forming an amorphous alloy layer (1) and a bonding glass layer (6) respectively on the first surface and the second surface of each of said plurality of substrates, said bonding glass layer (6) being made of low-melting point crystallizable glass;
(c) stacking said plurality of substrates (2) one upon another such that an amorphous alloy layer (1) of one substrate (2) is abutted to a bonding glass layer (6) of an adjacent substrate (2) and then subjecting said stacked substrates to a heat treatment to crystallize said bonding glass layer and to form a stacked block (7);
(d) cutting perpendicularly through all the layers and substrates of said stacked block to cut it into a first half (8c) and a second half (8b) to provide a first core bar and a second core bar each having a gap surface;
(e) forming perpendicularly through all said layers and substrates a winding groove (10) for receiving coil windings on said gap surface of said first core bar;
(f) polishing said gap surface of said first core bar and said second core bar;
(g) forming a non-magnetic layer made of high-melting point glass (8) on said gap surface (9a, 9b) of each of said first core bar and said second core bar;
(h) forming a gap-forming layer of a low-melting point crystallizable glass (3) over said non-magnetic layer on each of said first core bar and said second core bar;
(i) abutting said gap surface of said first core bar and said gap surface of said second core bar with each other;
(j) subjecting said first core bar and said second core bar to a heat treatment to bond said first core bar and said second core bar together so that said gap forming layer of said first core bar and said gap forming layer of said second core bar are melted and fused; said gap forming layer of said first core bar and said gap forming layer of said second core bar being crystallized to form a recording and reproducing gap made of a low-melting point crystallized glass (3) and having a high mechanical strength; and
(k) cutting said first core bar and said second core bar after being bonded in step (j) on both sides of each of said amorphous alloy layers between said plurality of substrates to obtain a plurality of magnetic heads having a predetermined thickness.

3. A magnetic head made in accordance with the method of claim 1 comprising a head core (1) made of a metallic magnetic material and composed of a pair of core parts bonded together through a magnetic gap, the magnetic gap is formed of a gap material comprising layers of non-magnetic material (4) each provided on opposing gap surfaces of said core parts and a low-melting-point glass (3) sandwiched therebetween, the magnetic head is characterised in that the low-melting-point glass (3) is crystallizable and becomes crystallized when the head core (1) is heat treated after the core parts have been brought into abutment.

4. A magnetic head according to Claim 3 characterised in that said metallic magnetic material is an amorphous alloy.

## Patentansprüche

1. Verfahren zur Herstellung eines Magnetkopfes mit einem aus einem Magnetmaterial hergestellten und ein erstes Kernteil und ein zweites Kernteil, die zur Schaffung eines Aufzeichnungs-/Wiedergabespaltes dazwischen mit einander verbunden sind umfassenden Kopfkern (1) wobei das Verfahren umfaßt:
(a) Bilden einer aus einem einen hohen Schmelzpunkt aufweisenden Glas (4) hergestellten nichtmagnetischen Lage auf einer Spaltoberfläche von sowohl dem ersten Kernglied als auch dem zweiten Kernglied;
(b) Bilden einer Spaltbildungslage aus einem einen niedrigen Schmelzpunkt aufweisenden Glas (3) über der nichtmagnetischen Lage auf sowohl dem ersten Kernglied als auch dem zweiten Kernglied;
(c) Zusammenstoßen der Spaltoberfläche des ersten Kerngliedes und der Spaltoberfläche des zweiten Kerngliedes;
(d) Unterziehen des ersten Kerngliedes und des zweiten Kerngliedes einer Wärmebehandlung, um das erste Kernglied und das zweite Kernglied miteinander zu verbinden, so daß die Spaltbildungslage des ersten Kerngliedes und die Spaltbildungslage des zweiten Kerngliedes geschmolzen und in einen flüssigen Zustand überführt werden; dadurch gekennzeichnet, daß das einen niedrigen Schmelzpunkt aufweisende Glas (3) der Spaltbildungslagen kristallisierbar ist und zur Bildung eines aus einem einen niedrigen Schmelzpunkt aufweisenden kristallisierten Glas (3) hergestellten und eine hohe mechanische Festigkeit aufweisenden Aufzeichnungs- und Wiedergabespaltes durch die Wärmebehandlung.

2. Verfahren zur Herstellung eines Magnetkopfes mit einem aus einem Magnetmaterial hergestellten und ein Paar von amorphen Legierungskernteilen, die zur Schaffung eines Aufzeichnungs- und Wiedergabespaltes dazwischen miteinander verbunden sind, umfassenden Kopfkern (1) wobei das Verfahren umfaßt:
(a) Liefern einer Mehrzahl von Trägern (2) wobei die Träger (2) eine erste und eine zweite Oberfläche aufweisen, die einander gegenüberliegend angeordnet sind;
(b) Bilden einer amorphen Legierungslage (1) auf der ersten Oberfläche und einer Bindungs-Glaslage (6) auf der zweiten Oberfläche von jedem aus der Mehrzahl von Trägern, wobei die Bindungs-Glaslage (6) aus einem einen niedrigen Schmelzpunkt aufweisenden, kristallisierbaren Glas hergestellt ist;
(c) Stapeln der Mehrzahl von Trägern (2) aufeinander, so daß eine amorphe Legierungslage (1) eines Trägers (2) an eine Bindungs-Glaslage (6) eines benachbarten Trägers (2) anstößt und dann Unterziehen der gestapelten Träger einer Wärmebehandlung zum Kristallisieren der Bindungs-Glaslage und zum Bilden eines gestapelten Blocks (7);
(d) senkrechtes Schneiden durch alle Lagen und Träger des gestapelten Blockes, um die zur Schaffung eines ersten Kerngliedes und eines zweiten Kerngliedes, die jeweils eine Spaltoberfläche aufweisen, in eine erste Hälfte (8c) und eine zweite Hälfte (8b) zu schneiden;
(e) senkrechtes Formen einer Bindungsnut (10) zum Aufnehmen von Spulenwindungen auf der Spaltoberfläche des ersten Kerngliedes;
(f) Polieren der Spaltoberfläche des ersten Kerngliedes und des zweiten Kerngliedes;
(g) Bilden einer aus einem einen hohem Schmelzpunkt aufweisenden Glas (8) hergestellten nichtmagnetischen Lage auf der Spaltoberfläche (9a, 9b) des ersten Kerngliedes und auch des zweiten Kerngliedes;
(h) Bilden einer Spaltbildungslage aus einem einen niedrigen Schmelzpunkt aufweisenden, kristallisierbaren Glas (3) über der nichtmagnetischen Lage auf dem ersten Kernglied und auch auf dem zweiten Kernglied;
(i) Aneinanderstoßen der Spaltoberfläche des ersten Kerngliedes und der Spaltoberfläche des zweiten Kerngliedes;
(j) Unterziehen des ersten Kerngliedes und des zweiten Kerngliedes einer Wärmebehandlung, um das erste Kernglied und das zweite Kernglied miteiander zu verbinden, so daß die Spaltbildungslage des ersten Kerngliedes und die Spaltbildungslage des zweiten Kerngliedes geschmolzen und in einen flüssigen Zustand überführt werden; wobei die Spaltbildungslage des ersten Kerngliedes und die Spaltbildungslage des zweiten Kerngliedes zur Bildung eines aus einem einen niedrigen Schmelzpunkt aufweisenden, kristallisierten Glas (3) hergestellten und eine hohe mechanische Festigkeit aufweisenden Aufzeichnungs- und Wiedergabespaltes; und
(k) Schneiden des ersten Kerngliedes und des zweiten Kern.-gliedes, nachdem diese im Schritt (j) miteinander verbunden wurden, auf beiden Seiten von jeder der amorphen Legierungslagen zwischen der Mehrzahl von Trägern, um eine Mehrzahl von Magnetköpfen mit einer festgelegten Dicke zu erhalten.

3. Gemäß dem Verfahren nach Anspruch 1 hergestellter Magnetkopf mit einem aus einem metallischen Magnetmaterial hergestellten und aus einem Paar von mittels eines Magnetspaltes miteinander verbundenen Kernteilen zusammengesetzten Kopfkern (1), wobei der Magnetspalt aus einem Spaltmaterial gebildet ist, welches umfaßt Lagen aus nichtmagnetischem Material (4) die jeweils auf gegenüberliegenden Spaltoberflächen der Spaltteile vorgesehen sind und einem dazwischen schichtweise angeordneten, einen niedrigen Schmelzpunkt aufweisenden Glas (3) wobei der Magnetkopf dadurch gekennzeichnet ist, daß das einen niedrigen Schmelzpunkt aufweisende Glas (3) kristallisierbar ist und kristallisiert wird, wenn der Kopfkern (1) wärmebehandelt wird, nachdem die Kernteile in Anlage zueinander gebracht worden sind.

4. Magnetkopf nach Anspruch 3, dadurch gekennzeichnet, daß das metallische Magnetmaterial eine amorphe Legierung ist.

## Revendications

1. Procédé de fabrication d'une tête magnétique comprenant un noyau de tête (1) fait en une matière magnétique et comprenant une première partie de noyau et une deuxième partie de noyau scellées l'une à l'autre pour créer entre elles un entrefer d'enregistrement ou de reproduction, ledit procédé consistant à :
a) former une couche non-magnétique faite en verre (4) à point de fusion élevé sur une surface d'entrefer de chacune desdites première barre de noyau et seconde barre de noyau;
b) former une couche formant entrefer en verre (3) à bas point de fusion sur ladite couche non-magnétique sur chacune desdites première barre de noyau et deuxième barre de noyau;
c) plaquer l'une sur l'autre ladite surface d'entrefer de ladite première barre de noyau et ladite surface d'entrefer de ladite deuxième barre de noyau;
d) soumettre ladite première barre de noyau et ladite seconde barre de noyau à un traitement thermique pour sceller ensemble ladite première barre de noyau et ladite seconde barre de noyau, de sorte que ladite couche formant entrefer de ladite première barre de noyau et ladite couche formant entrefer de ladite seconde barre de noyau fondent et s'unissent par fusion; caractérisé en ce que le verre (3) à bas point de fusion des couches formant entrefer est cristallisable et se cristallise par suite du traitement thermique pour former un entrefer d'enregistrement et de reproduction fait en verre cristallisé (3) à bas point de fusion et présentant une grande résistance mécanique.

2. Procédé de fabrication d'une tête magnétique comprenant un noyau de tête (1) faite en une matière magnétique et comprenant deux parties de noyau en alliage métallique amorphe scellées l'une à l'autre pour créer entre elles un entrefer d'enregistrement ou de reproduction, ledit procédé consistant à :
a) fournir plusieurs substrats (2), chacun desdits substrats (2) présentant une première et une deuxième surface dans des positions opposées l'une à l'autre;
b) former une couche en alliage métallique amorphe (1) et une couche de verre de scellement (6) respectivement sur la première surface et sur la deuxième surface de chacun desdits substrats, ladite couche de verre de scellement (6) étant faite en verre cristallisable à bas point de fusion;
c) empiler lesdits substrats (2) l'un sur l'autre de sorte qu'une couche d'alliage métallique amorphe (1) d'un substrat (2) soit plaquée sur une couche de verre de scellement (6) d'un substrat adjacent (2), et à soumettre alors lesdits substrats empilés à un traitement thermique pour cristalliser ladite couche de verre de scellement et pour former un bloc en pile (7).
d) couper perpendiculairement à travers toutes les couches et tous les substrats dudit bloc en pile pour le diviser en une première moitié (8a) et en une deuxième moitié (8b) afin d'obtenir une première barre de noyau et une deuxième barre de noyau, chacune présentant une surface d'entrefer;
e) former perpendiculairement à travers toutes lesdites couches et lesdits substrats une rainure (10) pour recevoir des enroulements sur ladite surface d'entrefer de ladite première barre de noyau;
f) polir lesdites surfaces d'entrefer de ladite première barre de noyau et de ladite seconde barre de noyau;
g) former une couche non-magnétique faite en verre (4) à point de fusion élevé sur ladite surface d'entrefer (9a,9b) de chacune desdites première et deuxième barres de noyau;
h) former une couche formant entrefer en verre cristallisable (3) à bas point de fusion par dessus ladite couche non-magnétique sur chacune desdites première et deuxième barres de noyau;
i) plaquer l'une sur l'autre ladite surface d'entrefer de ladite première barre de noyau et ladite surface d'entrefer de ladite deuxième barre de noyau;
j) soumettre ladite première barre de noyau et ladite deuxième barre de noyau à un traitement thermique pour sceller ensemble ladite première barre de noyau et ladite deuxième barre de noyau, de sorte que ladite couche formant entrefer de ladite première barre de noyau et ladite couche formant entrefer de ladite deuxième barre de noyau fondent et s'unissent par fusion; ladite couche formant entrefer de ladite première barre de noyau et ladite couche formant entrefer de ladite deuxième barre de noyau étant cristallisée de façon à former un entrefer d'enregistrement et de reproduction fait en verre cristallisé (3) à bas point de fusion et présentant une grande résistance mécanique; et
k) couper ladite première barre de noyau et ladite deuxième barre de noyau après qu'elles ont été scellées dans l'étape (j) sur les deux côtés de chacune desdites couches d'alliage métallique amorphe entre lesdits substrats pour obtenir plusieurs têtes magnétiques ayant une épaisseur fixée.

3. Tête magnétique fabriquée selon le procédé de la revendication 1, comprenant un noyau de tête (1) fait en une matière métallique magnétique et composé de deux parties de noyau scellées l'une à l'autre par un entrefer de circuit magnétique; ledit entrefer de circuit magnétique étant formé d'une matière d'entrefer comportant des couches de matière non-magnétique (4), disposées respectivement sur des surfaces d'entrefer opposes desdites parties de noyau, et du verre (3) à bas point de fusion pris en sandwich entre lesdites couches, la tête magnétique étant caractérisée en ce que le verre (3) à bas point de fusion est cristallisable et devient cristallisé lorsque le noyau de la tête subit un traitement thermique après que les parties du noyau ont été plaquées l'une sur l'autre.

4. Tête magnétique selon la revendication 3 caractérisée en ce que ladite matière métallique magnétique est un alliage métallique amorphe.
